# EUROPEAN PATENT APPLICATION

(11) **EP 2 863 070 A1**
(43) Date of publication of application: **22.04.2015**
(21) Application number: 14188672.1
(22) Date of filing: 13.10.2014
(51) Int. Cl.: F16B 2/10, B60R 9/10, B60R 9/048

(54) **Bicycle holder with grip clamp**

(30) Priority: 18.10.2013 IT PD20130287
(71) Applicant: Peruzzo, Martina, 36027 Rosa' (VI) (IT)
(72) Inventor: Peruzzo, Martina, 36027 Rosa' (VI) (IT)
(74) Representative: Modiano, Micaela Nadia

(57) **Abstract**

A bicycle holder (10) with grip clamp (11), comprising a supporting structure (12) and an arm (13) that is articulated thereto and is provided with a grip clamp (11); the grip clamp (11) has two rotatable jaws (14, 15), which are pivoted on a supporting body (16), each by way of one of two spaced pivots (17, 18); the rotatable jaws (14, 15) each have a pivoting and maneuvering portion (19, 20) and a grip tab (21, 22); the pivoting portion (19) of a first rotatable jaw (14) has a toothed arc-like portion (23) adapted to mesh with the corresponding toothed arc-like portion (24) of the other, opposite rotatable jaw (15), for the coordinated rotation of both jaws.

The rotatable jaws (14, 15) are retained in the respective closed configuration of the grip clamp (11) by ratchet locking means (25) with which quick-release means (26) are associated, and the rotatable jaws (14, 15) have elastic means for their quick return to the open configuration of the grip clamp (11).

## Description

The present invention relates to a bicycle holder with grip clamp.

Bicycle holders for transporting a bicycle on top of or behind a vehicle are today known and widespread, and comprise a supporting structure to be fixed to the roof or to the rear of the vehicle and an arm that is articulated to the supporting structure and is provided with a grip clamp for a tubular portion of the frame of a bicycle.

Such grip clamp can be of various types.

In a first type, the clamp has two jaws, one of which is fixed and the other capable of performing a translational movement, or both are capable of performing a translational movement so as to close around the tubular portion of the frame to be held.

A second type of clamp has two rotatable jaws, which are pivoted on a supporting body, each one by means of one of two spaced pivots with mutually parallel axes.

Such two rotatable jaws generally have a pivoting and maneuvering portion and a curved grip tab.

The pivoting portion of a first rotating jaw has a toothed arc-like portion that is adapted to mesh with the corresponding toothed arc-like portion of the other, opposite rotating jaw, so that rotating one jaw only results in the coordinated rotation of both jaws.

Such clamps with rotatable jaws are generally actuated during opening and closing by means of a threaded rod-like transmission that is controlled manually by a lever, or by another, similar mechanism adapted to control both the opening and the closing of the jaws.

Such bicycle holders with clamps, although widespread and appreciated, have the common disadvantage of requiring a relatively long time to perform the opening and closing of the clamp by rotating a wheel or a control lever, with the user being forced to support the loaded bicycle, or the bicycle to be loaded, at least partly with one hand, with great effort and inconvenience.

The aim of the present invention is to provide a bicycle holder with grip clamp which is capable of overcoming the above-mentioned drawbacks of conventional bicycle holders with clamps.

In particular, within this aim, an object of the invention is to provide a bicycle holder in which the grip clamp is quick to operate, both to close and to open.

Another object of the invention is to provide a bicycle holder that can be easily installed on a vehicle in the manner of conventional bicycle holders.

Another object of the invention is to provide a bicycle holder that can also be wall-mounted or ceiling-mounted.

Another object of the invention is to provide a bicycle holder with grip clamp which is easy to use without any particular prior training.

This aim and these and other objects which will become more evident hereinafter are achieved by a bicycle holder with grip clamp, comprising a supporting structure and an arm that is articulated thereto and is provided with a grip clamp, said grip clamp comprising two rotatable jaws, which are pivoted on a supporting body, each by means of one of two spaced pivots, said rotatable jaws each having a pivoting and maneuvering portion and a grip tab, said pivoting portion of a first rotatable jaw having a toothed arc-like portion adapted to mesh with the corresponding toothed arc-like portion of the other, opposite rotatable jaw, for the coordinated rotation of both jaws, said bicycle holder being characterized in that said rotatable jaws are retained in the respective closed configuration of the grip clamp by ratchet locking means with which quick-release means are associated, said rotatable jaws having elastic means for their quick return to the open configuration of the grip clamp.

Further characteristics and advantages of the invention will become more apparent from the description of a preferred, but not exclusive, embodiment of the bicycle holder with grip clamp according to the invention, which is illustrated by way of non-limiting example in the accompanying drawings wherein:
Figure 1 is a perspective view of a bicycle holder according to the invention, with a bicycle loaded;

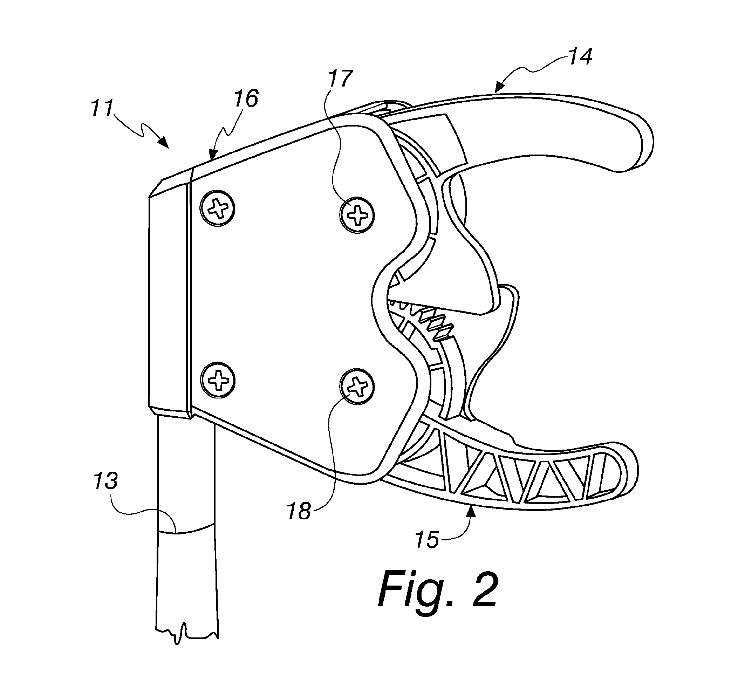

Figure 2 is a perspective view of the clamp according to the invention;
Figures 3 and 4 each show a cutaway perspective view of the clamp according to the invention;
Figures 5 to 9 each show a step of operation of the clamp according to the invention.

With reference to the figures, a bicycle holder with grip clamp according to the invention is generally designated with the reference numeral 10.

The grip clamp is designated in the figures with the reference numeral 11.

The bicycle holder 10 comprises a supporting structure 12, which should be understood as being of a known type, for mounting for example on a vehicle, or of the type for being fixed to a ceiling or to a wall, and an arm 13 that is articulated thereto and is provided with a grip clamp 11.

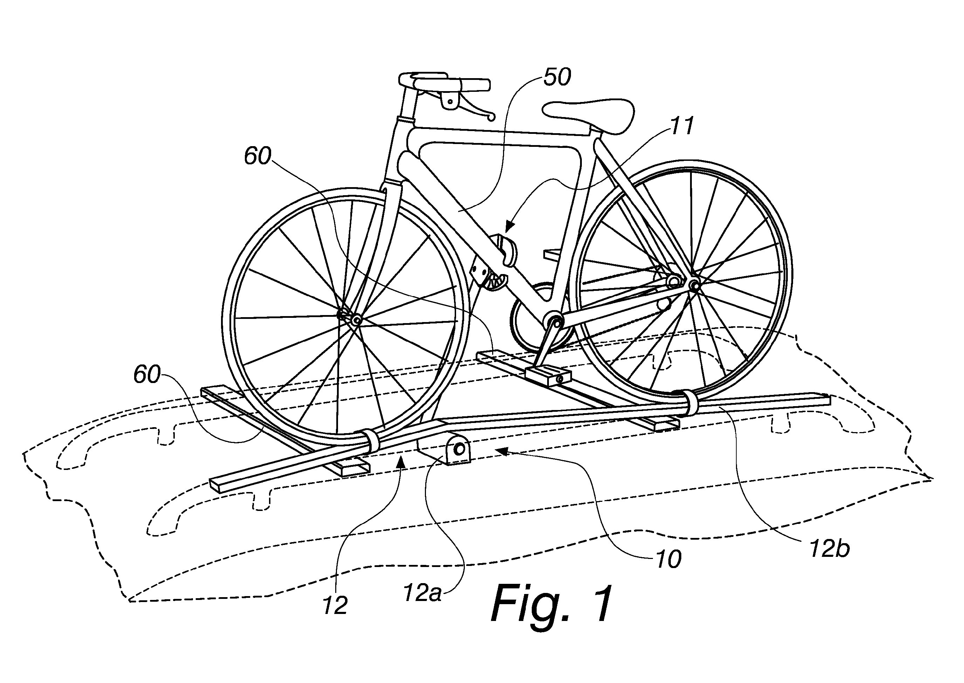

Figure 1 is, by way of non-limiting example of the invention, a schematic view of a supporting structure 12 of the type to be mounted on transverse bars 60, known as "utility" or "roof-rack" bars, which in turn are fixed to the roof of a motor vehicle; the supporting structure 12 comprises a base 12a to which the arm 13 is articulated, and a grooved bar 12b, with a longitudinal channel for resting the wheels of the bicycle, such grooved bar 12b being understood as being of known type.

The grip clamp 11 comprises two rotatable jaws 14 and 15, which are pivoted on a supporting body 16, each by means of one of two spaced pivots 17 and 18.

The rotatable jaws 14 and 15 each have a pivoting and maneuvering portion, respectively 19 and 20, and a grip tab 21 and 22 respectively.

The pivoting portion 19 of a first rotatable jaw 14 has a toothed arc-like portion 23 that is adapted to mesh with the corresponding toothed arc-like portion 24 of the other, opposite rotatable jaw 15, for the coordinated rotation of both jaws.

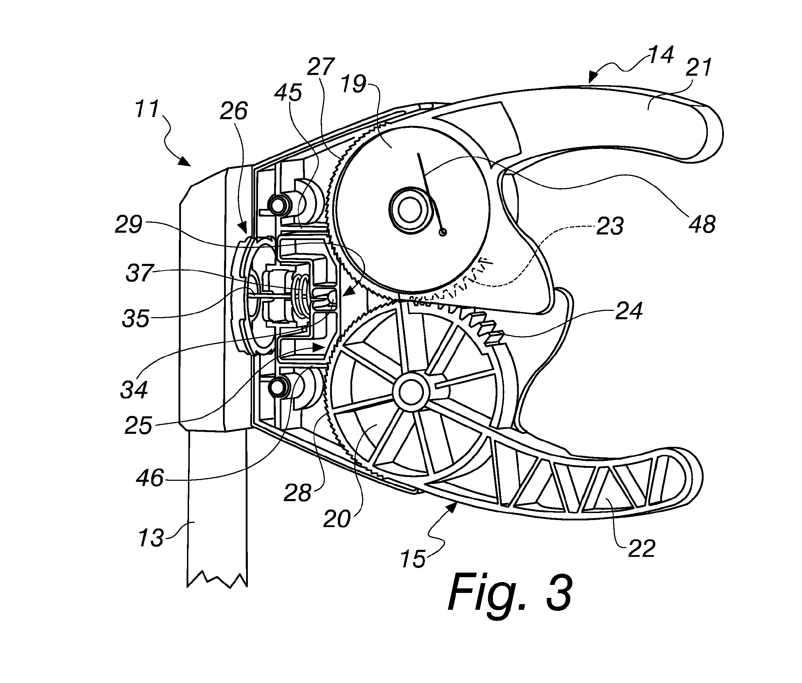

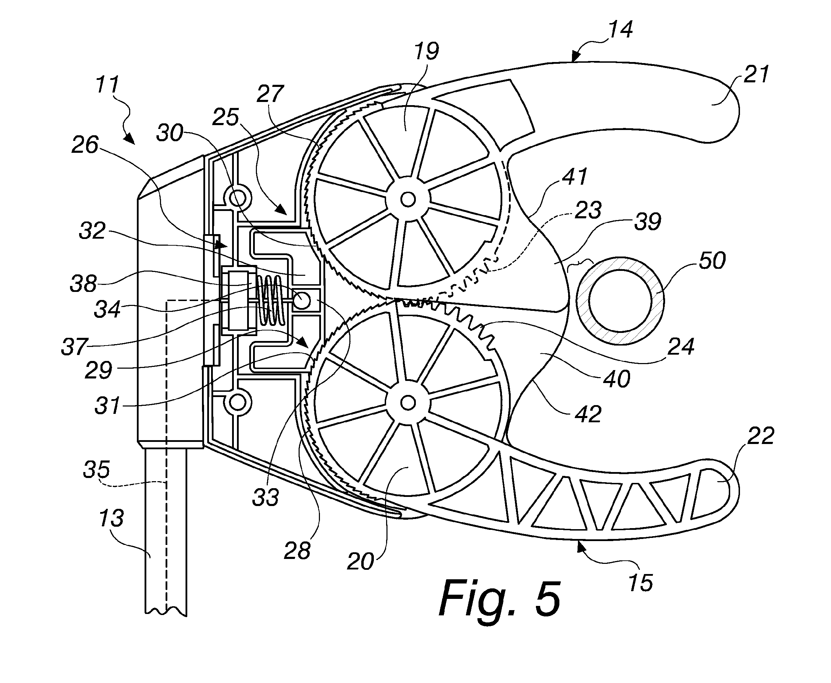

The rotatable jaws 14 and 15 are retained in the respective closed configuration of the grip clamp 11 by ratchet locking means 25, which are clearly visible in Figure 3 and in Figures 5 to 9.

Such ratchet locking means 25 are associated with quick-release means 26.

The rotatable jaws 14 and 15 have elastic means for their quick return to the open configuration of the grip clamp 11.

The ratchet locking means 25 comprise, in the present embodiment, for each pivoting portion 19 and 20, an arc with contoured teeth 27 and 28 that is adapted to engage a rotation-preventing element 29 provided with corresponding locking protrusions 30 and 31, such rotation-preventing element 29 being pushed by elastic means against the two arcs with contoured teeth 27 and 28.

The contoured teeth of the arcs with contoured teeth 27 and 28, and the corresponding locking protrusions 30 and 31 defined on the rotation-preventing element 29, have such a shape as to prevent the rotation of the rotatable jaws 14 and 15 only in the direction of mutual spacing of the grip tabs 21 and 22.

The rotation-preventing element 29 is constituted by a C-shaped body the corner portions of the central part 32 of which are provided with the locking protrusions 30 and 31, in said central part 32 a seat 33 for an engagement head 34 of a traction cable 35 being defined.

The traction cable 35 is adapted to translate the rotation-preventing element 29 away from the rotatable jaws 14 and 15 so as to free their rotation in the direction for opening the grip clamp 11.

The rotation-preventing element 29 is associated with elastic pusher means that are adapted to push it against the pivoting portions 19 and 20 of the rotatable jaws 14 and 15.

Such elastic means for pushing the rotation-preventing element 29 are constituted, for example, by a helical compression spring 37, which is arranged so as to operate between the central part 32 of the rotation-preventing element 29, and an opposite resting ridge 38 defined within the supporting body 16 of the clamp 11.

The quick-release means 26 thus comprise the traction cable 35 with the engagement head 34 inserted in the seat 33 of the rotation-preventing element 29; the traction cable 35 is arranged so as to slide within the arm 13 until a manual command occurs, such manual command being associated with the bicycle holder 10, such as a button, or a lever or other conventional manual actuation element, which for the sake of simplicity is not shown.

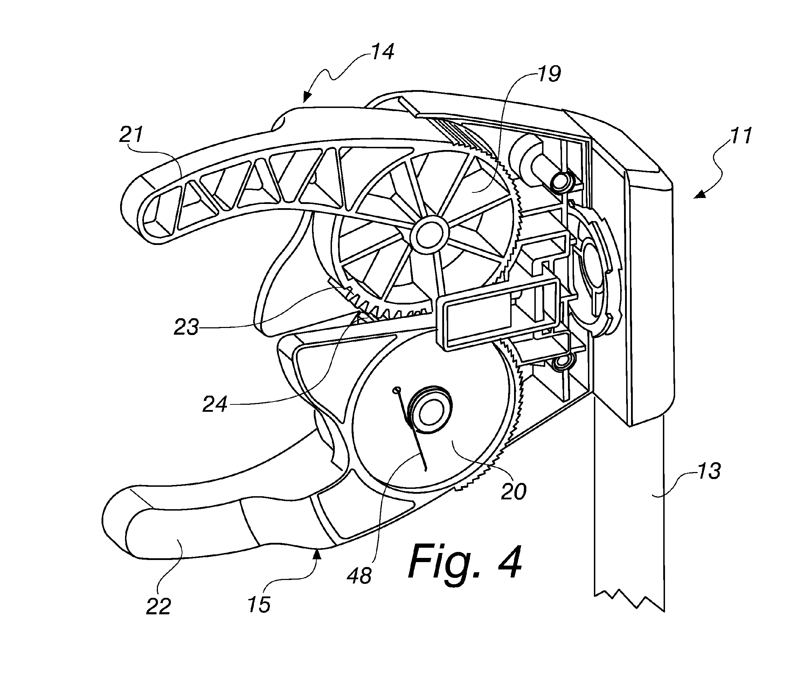

The elastic means for their quick return to the open configuration of the grip clamp 11 are constituted by helical torsion springs 48, which are clearly visible in Figures 3 and 4.

Corresponding locking tabs 39 and 40 extend from the pivoting and maneuvering portions 19 and 20, and are adapted to lock a tubular portion 50 of the frame of a bicycle to be held, as in Figure 5, when the latter is inserted between the two grip tabs 21 and 22 of the grip clamp 11.

Such locking tabs 39 and 40 are arranged to operate in proximity to each other on parallel staggered planes.

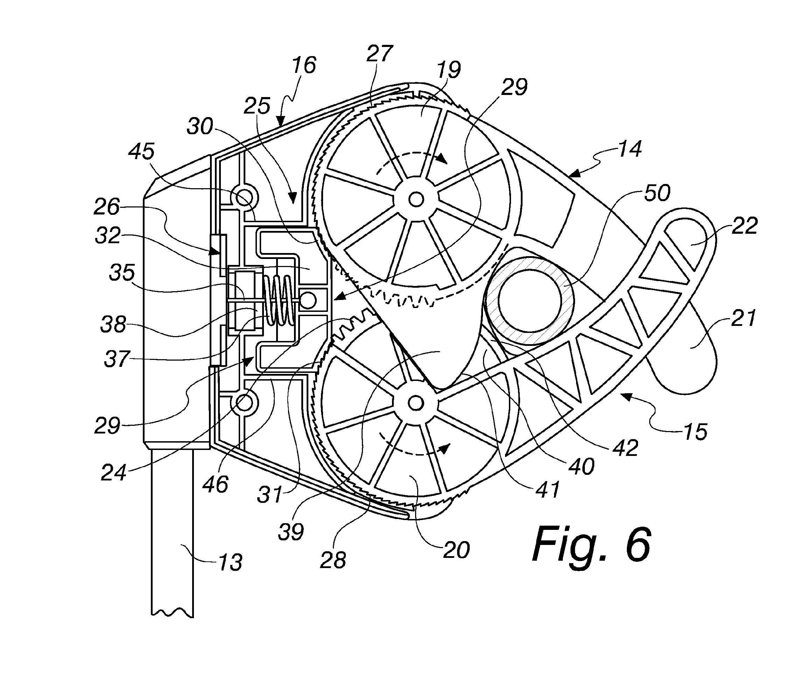

Such locking tabs 39 and 40 have a cam profile 41 and 42, such that when the portion of the frame 50 is pressed against such cam profiles 41 and 42, the rotatable jaws 14 and 15 are each caused to rotate in the direction for closing the grip clamp 11, as can be clearly seen in Figure 6.

During the rotation of the rotatable jaws 14 and 15 the arcs with contoured teeth 27 and 28 slide on the corresponding toothed portions 30 and 31 of the rotation-preventing element 29 and, at the end of the rotation, the engagement of such toothed portions 30 and 31 with respective portions of the arcs with contoured teeth 27 and 28 prevents the involuntary splaying of the jaws 14 and 15, which thus remain closed so as to hold the tubular portion of the bicycle frame 50.

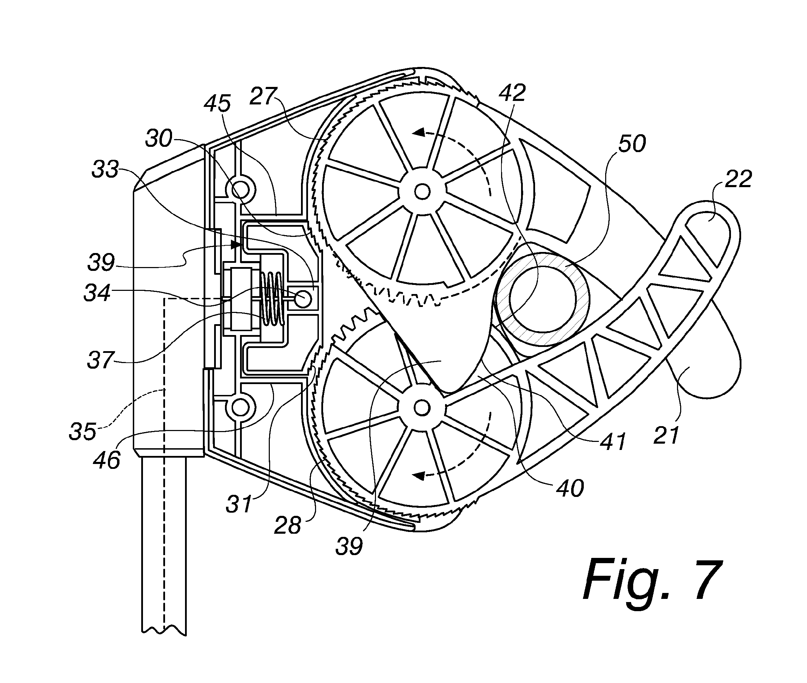

Figure 7 shows the precise instant of disengaging the toothed portions 30 and 31 from the arcs with contoured teeth 27 and 28; such configuration for disengagement is determined by the traction of the traction cable 35, which, by means of the engagement head 34 engaged in the seat 33 of the rotation-preventing element 29, determines the translational movement of the rotation-preventing element 29 away from the jaws 14 and 15, with compression of the helical spring 37.

The rotation-preventing element 29 performs a translational motion between two guide walls 45 and 46 which are defined inside the supporting body 16 of the grip clamp 11.

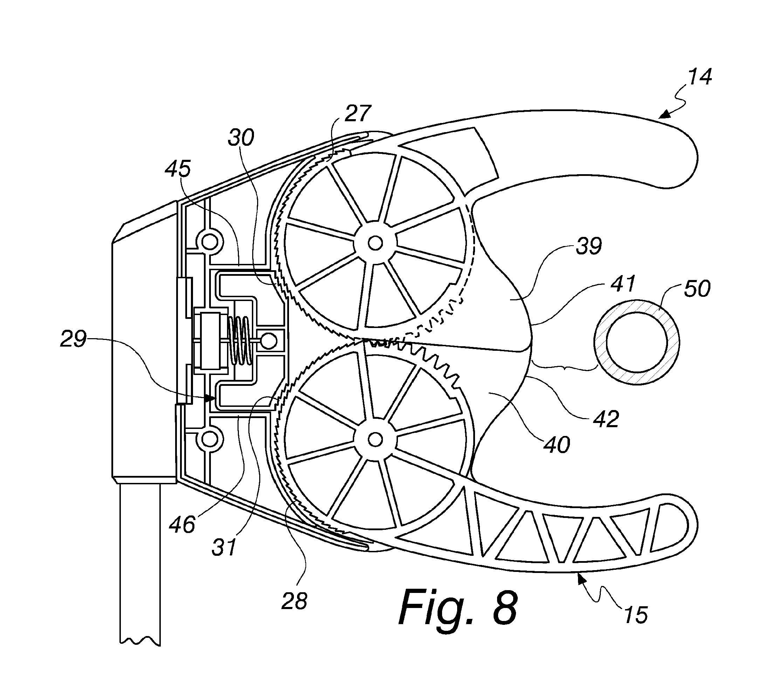

The elastic means for the quick return of the jaws 14 and 15 to the open configuration of the grip clamp 11 return them to the configuration of the clamp 11 when open, as in Figure 8.

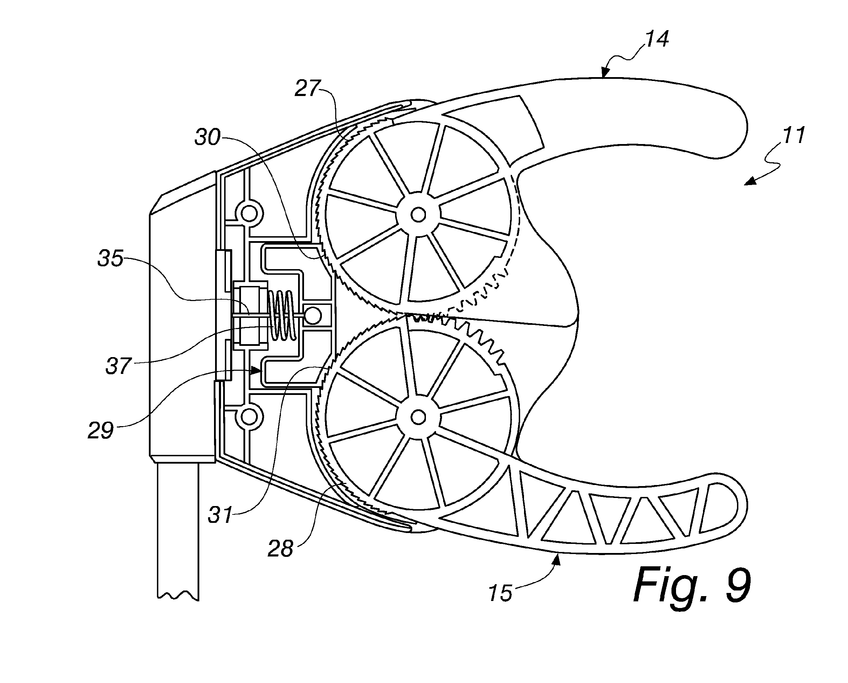

Figure 9 shows the stable open configuration for the clamp 11, with the arcs with contoured teeth 27 and 28 engaging the corresponding toothed portions 30 and 31 of the rotation-preventing element 29, owing to the release of the traction cable 35, which has occurred, and the consequent translational movement of the rotation-preventing element 29 toward the jaws 14 and 15 which is determined by the thrust of the helical spring 37.

The invention also relates to a grip clamp 11, particularly for a bicycle holder, comprising two rotatable jaws 14 and 15, which are pivoted on a supporting body 16, each by means of one of two spaced pivots 17 and 18, each of the rotatable jaws 14 and 15 having a pivoting and maneuvering portion 19 and 20 and a grip tab 21 and 22 respectively; the pivoting portion 19 of a first rotatable jaw 14 has a toothed arc-like portion 23 that is adapted to mesh with the corresponding toothed arc-like portion 24 of the other, opposite rotatable jaw 15, for the coordinated rotation of both jaws.

The particularity of such grip clamp 11 lies in the fact that the rotatable jaws 14 and 15 are retained in the respective closed configuration of the grip clamp 11 by ratchet locking means 25, with which quick-release means 26 are associated; the rotatable jaws 14 and 15 have elastic means for their quick return to the open configuration of the grip clamp 11.

In practice it has been found that the invention fully achieves the intended aim and objects.

In particular, with the invention a bicycle holder has been devised the clamp of which is quick to operate, both to close and to open, where it is sufficient to push the portion of frame against the locking tabs 39 and 40 in order to obtain the closure of the jaws 14 and 15 about the portion of the frame, and where it is similarly simple to free the frame by actuating the cable 35 in traction with release of the ratchet means and immediate automatic opening of the clamp 11.

What is more, with the invention a bicycle holder has been devised that can be easily installed on a vehicle in the manner of conventional bicycle holders.

It should be understood that the bicycle holder 10 can be attached to a structure for fixing to, for example, a wall or a ceiling.

Furthermore, with the invention a bicycle holder with grip clamp has been devised which is easy to use without any particular prior training.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. PD2013A000287 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A bicycle holder (10) with grip clamp (11), comprising a supporting structure (12) and an arm (13) that is articulated thereto and is provided with a grip clamp (11), said grip clamp (11) comprising two rotatable jaws (14, 15), which are pivoted on a supporting body (16), each by means of one of two spaced pivots (17, 18), said rotatable jaws (14, 15) each having a pivoting and maneuvering portion (19, 20) and a grip tab (21, 22), said pivoting portion (19) of a first rotatable jaw (14) having a toothed arc-like portion (23) adapted to mesh with the corresponding toothed arc-like portion (24) of the other opposite rotatable jaw (15), for the coordinated rotation of both jaws, said bicycle holder (10) being **characterized in that** said rotatable jaws (14, 15) are retained in the respective closed configuration of the grip clamp (11) by ratchet locking means (25) with which quick-release means (26) are associated, said rotatable jaws (14, 15) having elastic means for their quick return to the open configuration of the grip clamp (11).

2. The bicycle holder according to claim 1, **characterized in that** said ratchet locking means (25) comprise, for each pivoting portion (19, 20), an arc with contoured teeth (27, 28) that is adapted to engage a rotation-preventing element (29) provided with corresponding locking protrusions (30, 31), said rotation-preventing element (29) being pushed by elastic means against the two arcs with contoured teeth (27, 28).

3. The bicycle holder according to claim 2, **characterized in that** the contoured teeth of the arcs with contoured teeth (27, 28) and the corresponding locking protrusions (30, 31) defined on the rotation-preventing element (29) have such a shape as to prevent the rotation of the rotatable jaws (14, 15) only in the direction of mutual spacing of the grip tabs (21, 22).

4. The bicycle holder according to one or more of the preceding claims, **characterized in that** said rotation-preventing element (29) is constituted by a C-shaped body the corner portions of the central part (32) of which are provided with the locking protrusions (30, 31), in said central part (32) a seat (33) for an engagement head (34) of a traction cable (35) being defined.

5. The bicycle holder according to one or more of the preceding claims, **characterized in that** said quick-release means (26) comprise said traction cable (35) with the engagement head (34) inserted in the seat (33) of the rotation-preventing element (29), said traction cable (35) being arranged so as to slide within the arm (13) until a manual command occurs, elastic pusher means being associated with the rotation-preventing element (29) and being adapted to push it against the pivoting portions (19, 20) of the rotatable jaws (14, 15).

6. The bicycle holder according to one or more of the preceding claim, **characterized in that** said traction cable (35) is adapted to translate the rotation-preventing element (29) away from the rotatable jaws (14, 15) so as to free their rotation in the direction for opening the grip clamp (11).

7. The bicycle holder according to claim 5, **characterized in that** said elastic means for pushing the rotation-preventing element (29) are constituted by a helical compression spring (37), which is arranged so as to operate between the central part (32) of the rotation-preventing element (29) and an opposite resting ridge (38) defined within the supporting body (16) of the clamp (11).

8. The bicycle holder according to one or more of the preceding claims, **characterized in that** said elastic means for the quick return of the rotatable jaws (14, 15) to the open configuration of the grip clamp (11) are constituted by helical torsion springs (48).

9. A grip clamp (11), particularly for a bicycle holder, comprising two rotatable jaws (14, 15), which are pivoted on a supporting body (16), each by means of one of two spaced pivots (17, 18), each of said rotatable jaws (14, 15) having a pivoting and maneuvering portion (19, 20) and a grip tab (21, 22), said pivoting portion (19) of a first rotatable jaw (14) having a toothed arc-like portion (23) that is adapted to mesh with the corresponding toothed arc-like portion (24) of the other opposite rotatable jaw (15), for the coordinated rotation of both jaws, said grip clamp (11) being **characterized in that** said rotatable jaws (14, 15) are retained in the respective closed configuration of the grip clamp (11) by ratchet locking means (25), with which quick-release means (26) are associated, said rotatable jaws (14, 15) having elastic means for their quick return to the open configuration of the grip clamp (11).
